# EUROPEAN PATENT SPECIFICATION

(11) **EP 4 260 344 B1**
(45) Date of publication and mention of the grant of the patent: **18.03.2026**
(21) Application number: 21904397.3
(22) Date of filing: 09.12.2021
(51) Int. Cl.: B01D 9/00, C02F 1/22, G21F 9/06, G21F 9/12, G21C 19/34, B01D 59/08, B01D 59/20, B01D 59/50, C02F 101/00, C02F 103/02

(54) **SYSTEM AND METHOD FOR TREATING FLUID CONTAINING RADIOLOGICAL MATERIAL**
SYSTEM UND VERFAHREN ZUR BEHANDLUNG VON RADIOLOGISCHES MATERIAL ENTHALTENDEM FLUID
SYSTÈME ET PROCÉDÉ DE TRAITEMENT D'UN FLUIDE CONTENANT DES MATÉRIAUX RADIOLOGIQUES

(30) Priority: 09.12.2020 US 202063123321 P
(43) Date of publication of application: 18.10.2023
(73) Proprietor: Atkins Energy Products & Technology, LLC, Tampa, Florida 33607 (US)
(72) Inventor: GOWER TUCKER, Graham, Tampa, Florida 33607 (US); RICHARDSON, Gareth Huw, Tampa, Florida 33607 (US)
(74) Representative: Meissner Bolte Partnerschaft mbB
(86) International application number: PCT/US2021/062601
(87) International publication number: WO 2022/125772

(56) References cited:
- WO-A1-03/043027
- WO-A1-03/043027
- WO-A1-2019/220001
- WO-A1-2019/220001
- US-A- 4 476 048
- US-A- 5 055 237
- US-A1- 2012 067 047
- US-A1- 2015 038 760
- US-A1- 2017 217 802
- US-A1- 2019 119 130
- US-B1- 6 263 037

## Description

### CROSS REFERENCE TO RELATED APPLICATION AND CLAIM OF PRIORITY

The present application claims priority to U.S. provisional patent application no. 63/123,321 filed on December 9, 2020.

### TECHNICAL FIELD

Aspects of the present disclosure relate to the field of fluid treatment, and in particular, in some embodiments, aspects of the present disclosure relate to systems and methods for treating fluid containing radiological material.

### BACKGROUND

When there has been a fault on a nuclear reactor which means that the fuel is trapped within the reactor or when it is being decommissioned there are many technical challenges. Often the fuel has reached high temperatures under decay heat, and has melted, destroying the casing the fuel was held in, the support structure, and any containment structure. Following cooling, the result is a mixture of solidified nuclear fuel, fission products, fuel rod casings, moderator rods, steel and concrete which may recovered and/or segmented for storage.

The document US 5,055,237 A relates to a volume reduction process comprising combinations of a freezing eutectic, bulk, indirect crystallization process and a radwaste electrodialysis process.

The document WO 2019/220001 A1 relates to a method of recovering radiochemically clean boron from aqueous liquid radioactive waste which contains radionuclides and boron.

The document WO 2003/043027 A1 relates to a method for recovering boron or decontaminating boron from evaporator bottoms of pressurized water reactors.

### SUMMARY

The present invention relates to a process for treating fluid according to independent claim 1 as well as to a system for treating fluid according to independent claim 11, wherein further developments of the inventive process and the inventive system are provided in the sub-claims, respectively.

Cooling of a nuclear reactor when it is being decommissioned is provided by addition of water to the fuel melt, with the used cooling water removed from the reactor, then treated and recycled to the reactor. Whilst this water is contaminated with radioactive species, the activity may be low enough for conventional treatment processes to be used for treatment. Aspects of the present application relate to the situation when the melt is to be cut up into retrievable sections. The cutting process is carried out underwater and as a by-product of cutting, the cooling water becomes contaminated with highly radioactive particles. The highly radioactive particles can be incompatible with the conventional treatment processes due to;
- High level of radiation will degrade the materials of construction if polymeric
- The particles may become lodged in filters and strainers
- Ion exchange materials will be overloaded and degrade
- Complex systems will become rapidly contaminated

Furthermore by comparison with vacuum distillation technology, in some scenarios, freeze crystallisation can consume significantly less energy.

In some embodiments, cooling water can be reused for waste minimisation purposes and can address limitations of storage.

In some embodiments, aspects of the present application can provide the return of cooling water which is clear enough to allow remote cutting operations to be observed under water.

In accordance with one aspect, there is provided, a system for treating fluid containing radioactive particulate received from a reactor cutting zone. The system includes at least one heat exchanger for cooling the fluid containing the radioactive particulate; at least one pump configured to pump the fluid at a velocity greater than a deposition threshold through the at least one heat exchanger; a crystallisation unit configured to cool the fluid initially cooled by the at least one heat exchanger to a temperature below a freezing point of the fluid; at least one scraper for removing ice crystals formed from the fluid in the crystallization unit; a wash system configured to reduce small particles entrained by the ice crystals with surface water; and a melter configured to melt the washed ice crystals into a fluid to be returned to the reactor cutting zone.

Embodiments may include combinations of the above features.

In accordance with another aspect, there is provided, a system for treating fluid comprising water, radioactive particulate, dissolved ions, and a neutron absorber, the fluid received from a reactor cutting zone. The system comprises: at least one heat exchanger for cooling the fluid containing the radioactive particulate; at least one pump configured to pump the fluid at a velocity greater than a deposition threshold through the at least one heat exchanger; a crystallisation unit configured to cool the fluid initially cooled by the at least one heat exchanger to a temperature below a freezing point of the fluid to form a first crystal comprising the water and to form a second crystal comprising the neutron absorber, the crystallisation unit comprising a mechanical device for removing the first crystal from the crystallisation unit and an outlet for discharging the second crystal, radioactive particulate, and the dissolved ions; at least one scraper for removing at least one of the first and second crystals formed from the fluid in the crystallization unit; a wash system configured to reduce small particles entrained on the first crystal with surface water; and a melter configured to melt the washed crystals into a purified fluid to be returned to the reactor cutting zone,

In an embodiment, the system comprises a fluid treatment system configured to treat the melted crystals before they are returned to the reactor cutting zone,

In an embodiment, the system comprises a settling tank for receiving bottom product from the crystallisation unit, and separating the bottom product; and a supernatant treatment system configured to treat supernatant from the settling tank.

In an embodiment, the system comprises one or more shielding elements configured to provide shielding for one or more aspects of the system.

In an embodiment, the system comprises a second stage crystalliser unit configured to receive the cooled fluid, the second crystal, radioactive particulate, and the dissolved ions from the crystalliser unit, the second stage crystalliser unit comprising a heat exchange for reducing a temperature of the cooled fluid, the second crystal, radioactive particulate, and the dissolved ions to below a saturation point of the neutron absorber to precipitate a third crystal comprising water and a fourth crystal comprising the neutron absorber, the second stage crystalliser unit comprising a second mechanical device for removing the third crystal and a second outlet for discharging cooled fluid, the second crystal, the fourth crystal, radioactive particulate, and the dissolved ions.

In an embodiment, the system comprises a separator for separating the cooled fluid, the second crystal, the fourth crystal, radioactive particulate, and the dissolved ions discharged from the second outlet of the second stage crystalliser unit into a crystal rich slurry and a liquor concentrate, the crystal rich slurry including the second crystal and the fourth crystal, and the liquor concentrate including the cooled fluid, radioactive particulate, and the dissolved ions.

Embodiments may include combinations of the above features.

In accordance with another aspect, there is provided, a process for treating fluid comprising water, radioactive particulate, dissolved ions, and a neutron absorber, the fluid received from a cutting zone for recovery of radioactive components, the process comprising: receiving a fluid in a crystallization unit, the fluid comprising the water, the radioactive particulate, and the neutron absorber dissolved in the fluid; cooling the fluid below a freezing point of the fluid to form a first crystal comprising the water and to form a second crystal comprising the neutron absorber, the second crystal having a greater density than the first crystal; separating the first crystal from the second crystal, the radioactive particulate, and the dissolved ions.

In an embodiment, the neutron absorber is boric acid.

In an embodiment, the radioactive particulate have a settling rate in a range of 0.5 to 2 m.hr⁻¹.

In an embodiment, the process comprises removing solid suspended particles from the fluid before the fluid is received in the crystallization unit.

In an embodiment, the process comprises pre-cooling the fluid before it is received in the crystallisation unit to a temperature above the freezing point of the fluid.

In an embodiment, the process comprises mechanically scrapping at least one of the first crystal and the second crystal from a cooled surface of the crystallisation unit.

In an embodiment, the process comprises mechanically removing the first crystal from the crystallisation unit.

In an embodiment, the process comprises washing the first crystal to cleanse the surface of the first crystal to reduce an amount of the fluid and the radioactive particulate entrained on the surface of the first crystal.

In an embodiment, the process comprises melting the first crystal to form a cleansed water and re-circulating the cleansed water to the cutting zone.

In an embodiment, the process comprises maintaining, with at least one pump, the fluid at a velocity greater than a deposition threshold through the crystallization unit.

In an embodiment, the process comprises removing the second crystal, the radioactive particulate, and the dissolved ions from a bottom portion of the crystallization unit, and separating the second crystal from the radioactive particulate, and the dissolved ions in a separator using at least one of gravity sedimentation, settling, or enhanced gravity separation. In an embodiment, enhanced gravity separation is hydrocycloning or centrifuging.

In an embodiment, the process comprises providing shielding from the radioactive particulate for at least one aspect of the process.

Embodiments may include combinations of the above features.

In accordance with another aspect, there is provided: a method for treating fluid containing radioactive particulate received from a reactor cutting zone. The method includes cooling the fluid containing the radioactive particulate with at least one heat exchanger; maintaining, with at least one pump, the fluid at a velocity greater than a deposition threshold through the at least one heat exchanger; cooling the fluid in a crystallisation unit to a temperature below a freezing point of the fluid; removing ice crystals formed from the fluid in the crystallization unit; washing the ice crystals to reduce small particles entrained by the ice crystals with surface water; and melt the washed ice crystals into a fluid to be returned to the reactor cutting zone.

Embodiments may include combinations of the above features.

Further details of these and other aspects of the subject matter of this application will be apparent from the detailed description included below and the drawings.

### BRIEF DESCRIPTION OF DRAWINGS

In the figures, embodiments are illustrated by way of example. It is to be expressly understood that the description and figures are only for the purpose of illustration and as an aid to understanding.
FIG. 1 is a schematic diagram showing aspects of an example treatment system.
FIG. 2 is a schematic diagram showing aspects of an example treatment system.
FIG. 3 is a schematic diagram showing an example process for treating fluid comprising water, radioactive particulate, dissolved ions, and a neutron absorber.

### DETAILED DESCRIPTION

Decommissioning of nuclear installations containing very high levels of radioactivity often requires the cutting of radioactive materials under water. In an example, recovery of materials may be taken from a reactor's uranium core, supporting steel work, fuel cladding, fission products, and surrounding concrete. The mixture of materials to be recovered is of variable composition and density, and methods such as laser cutting are required to segment portions of the reactor for removal, e.g. the reactor's core. The cutting process of radioactive materials may be carried out underwater for cooling purposes and to prevent spread of contaminated dust. As a by-product of cutting, the cooling water becomes contaminated with highly radioactive particles and dissolved radioactive species. The contaminated cooling water is also referred to as "liquor" herein. High levels of radioactivity are incompatible with conventional water treatment techniques, such as ion exchange or semi permeable membrane separation, because the energy from the radioactive decay breaks down the covalent bonds between two constituent molecules. The cooling water may be reused as much as practical for waste minimisation purposes and due to limitations of storage.

Cooling water is fed to the (reactor) cutting zone, and accumulates in the cutting zone to form a pool of cooling water. One it has passed through the cutting zone, the cooling water can be contaminated by solid particles including zircalloy, uranium oxide, strontium, caesium, steel, stainless steel, concrete and/or other materials present in the reactor. The fluid is now referred to as "liquor". The particle size of solids in the liquor is dependent on the cutting technology and is typically less than 5mm.

Cooling water may also comprise neutron absorber(s) to prevent radioactive material from achieving criticality in the cutting zone. In an example, a neutron absorber may be boric acid. The neutron absorber may be dissolved in the cooling water and circulated into the cutting zone and subsequently form part of the liquor. As described herein, the neutron absorber may be recovered from the liquor according to the systems and methods described herein for re-use or storage.

Although terms such as "maximize", "minimize" and "optimize" may be used in the present disclosure, it should be understood that such term may be used to refer to improvements, tuning and refinements which may not be strictly limited to maximal, minimal or optimal.

The term "connected" or "coupled to" may include both direct coupling (in which two elements that are coupled to each other contact each other) and indirect coupling (in which at least one additional element is located between the two elements).

The term "substantially" as used herein may be applied to modify any quantitative representation which could permissibly vary without resulting in a change in the basic function to which it is related. For example, a drive shaft as disclosed herein having a circular transverse cross-section may permissibly have a somewhat non-circular cross-section within the scope of the invention if its rotational driving capability is not materially altered.

The terms "cutting zone" or "cutting operation" as used herein refers to an underwater volume where radioactive materials are present and may be cut for recovery. Cutting occurs underwater and in the presence of a neutron absorber to regulate heat and mitigate against radioactive material from becoming critical.

The term "melter" as used herein refers to a heated vessel used to melt crystals described herein.

Aspects of various embodiments are described through reference to the drawings.

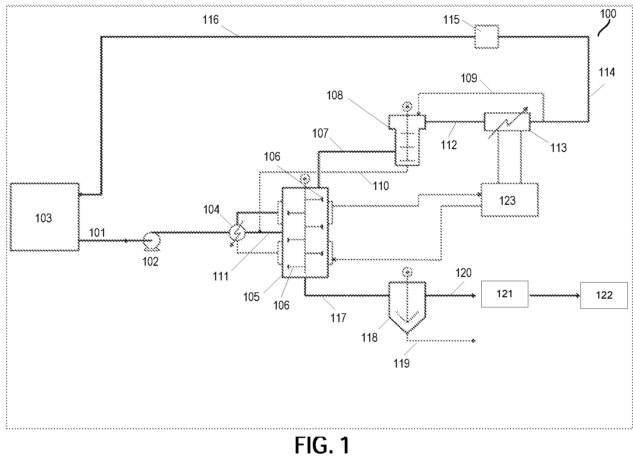

With reference to FIG. 1, which illustrates an example system 100 according to the present disclosure, the highly radioactive liquor 101 is pumped by a pump 102 suitable for solids handling (for example, an open impeller metallic centrifugal pump) from the cutting zone 103. In some embodiments, the pump 102 is configured to pump the fluid 101 at a velocity high enough to maintain suspension. A suitable velocity is dependent on the cutting technology. In some embodiments, this velocity is greater than 1.5 m/s.

The first stage of the process is pre-cooling by one or more heat exchangers 104. In some embodiments, two heat exchangers are configured to operate in series. In some embodiments, more than two heat exchangers can be used.

In some embodiments, the heat exchangers 104 are commercial metallic shell and tube construction and are designed to prevent accumulation of radioactive particulates. The heat exchangers are cooled by media selected for optimisation of the cooling/melting cycle energy with the intermediate of a commercial refrigeration plant.

In some embodiments with multiple exchangers 104, a first stage heat exchanger can be cooled with chilled water and the second stage by water/glycol mixture or by direct evaporation of refrigerant. The liquor is brought close to its freezing point. Shielding may be provided to protect operators and the liquid velocity is maintained to prevent deposition.

The cooled liquor 101 is introduced to the crystalliser unit 105 wherein the liquor is cooled below its freezing point. The process of nucleate freezing and ice crystal formation may occur on internal cooled surfaces 106 of the crystalliser unit 105 which are mechanically scraped to prevent build-up of ice. Mechanical means, such as electrically driven mechanical scrapers, are employed to remove ice deposits from cooled internal surfaces. Crystallisation may also occurs in the bulk liquid within crystalliser unit 105. During the crystallisation process the majority of particulate material (for example, uranium oxide chips, steel swarf, concrete dust, and the like) described above is excluded from the ice crystal due to the characteristics of the physical chemistry. The ice crystals formed from water are of lower density than the liquor, so rise under natural buoyancy. The ice crystals may contain trace amounts of dissolved salts and fine particulates. A cooling system 123 may provide a cooling fluid for cooling crystalliser unit 105; and more specifically, internal cooled surfaces 106.

Some solid particles (e.g. those of size greater than approximately 100 µm (microns)) entrained with the liquor may settle quickly to the bottom of the crystalliser 105. Some particles (e.g. those of less than 100 Z µm (microns)) may settle slowly in the liquor and are withdrawn from the bottom of the crystalliser with the settled particles.

System 100 may be made of materials that are resistant to radioactivity. Radiation shielding is employed where necessary to protect operators and sensitive equipment.

When in use, ice crystals 107 formed from water generated in crystallisation unit 105 rise to the top of the unit and are continuously removed by buoyancy or mechanical means to a wash system 108. The wash system 108 is configured to reduce the entrainment of small particles on the surface of the ice crystals using wash fluid 109, e.g. water. Used wash water 110 is returned to feed steam 111.

The washed ice crystals 112 are transferred to a melter 113 where they are melted. In some embodiments, the melter 113 is configured to use heat rejected from the initial cooling stages, saving electrical energy. Melter 113 is a vessel with a recycling water stream. The melted ice crystals are the product and are treated by a water treatment system 123 and returned to the reactor as clear cold cooling water. Cooling system 123 may circulate warmed cooling fluid from crystalliser unit 105 to melter 113 to melt washed ice crystals 112, and be recirculated to crystalliser unit 105. In some embodiments, the melted ice crystals 114 are treated with a treatment process 115 such as Spinionic^{™}, filtration, ion-exchange and/or another suitable treatment process for purifying the melted ice crystal stream for re-circulation to cutting zone 103 in purified water stream 116.

A bottom product 117 from the crystallisation unit 105 is a mixture of settled solids, fine suspended solids and cold liquor which is fed to settling tank 118. Solids 119 may be separated from the water by settlement in settling tank 118 and, dependent on the composition bottom product 117, chemical dosing. In some embodiments, supernatant 120 from settling tank 118 can be treated by processes such as ALPS^{™} 121 and Spinionic ^{™} 122. Solids 119 bottom product from settling tank 118 may be suitable for sludge treatment, and/or final disposal.

In some embodiments, system 100 can treat water containing highly radioactive particulate contamination, including fuel and fission products.

In some embodiments, at least some aspects of system 100 avoid the use of a physical barrier (filter/membrane) to separate the particulate contamination. In some embodiments, the system may be resistant to high levels of radiation due to the elimination of polymeric materials which are employed in the reverse osmosis or ultrafiltration stages of conventional treatment routes. In some embodiments, each component of system 100, including crystallization unit 105, is free of polymeric materials.

In some embodiments, the system may use significantly less energy than other barrier-less technologies such as vacuum distillation.

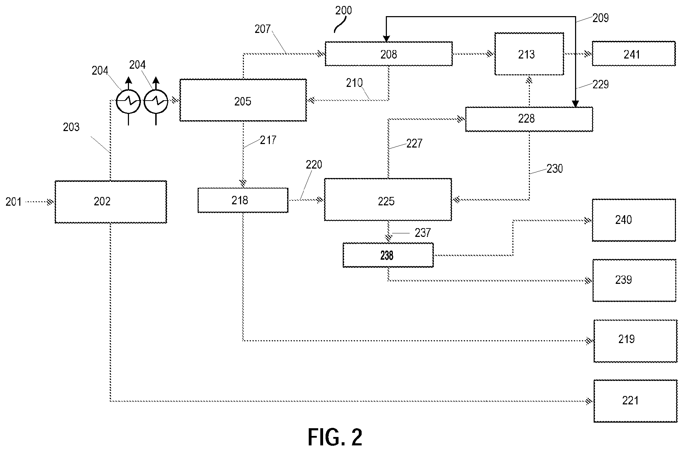

With reference to FIG. 2, system 200 for treating fluid comprising water, radioactive particulate, dissolved ions, and a neutron absorber is illustrated. Similar to the liquor 101 of the example shown in FIG. 1, fluid 201 may be contaminated water containing radioactive particulates received from a cutting operation for recovery of radioactive components. The composition of the fluid 201 is dependent on the item cut, but may include derivatives of zircalloy, uranium oxide, strontium, caesium, steel, stainless steel, concrete and other materials present in the reactor. Fluid 201 may be referred to as liquor, and is highly radioactive. The particle size of solids in the liquor is dependent on the cutting technology and is typically less than 5mm, and may be 1 to 20 µm (microns) The liquor is transferred by a pump suitable for solids handling (e.g. open impeller metallic centrifugal) from the cutting zone at a velocity high enough to maintain suspension. Velocity of fluid 201 is dependent on the cutting technology. In an example, velocity of fluid 201 is greater than 2 m/s.

Fluid 201 may undergo an optional initial separation in separator 202. Separator 202 may be configured to remove solid suspended particles that have been entrained in fluid 201, i.e. the liquor, during transfer from the cutting zone. The technical specifications of separator 202 are selected based on the characteristics of the solids in fluid 201. Separator 202 may be configured to remove 99% of particulates in fluid 201 that are greater than 10 µm before entry to the freeze crystallisation process of crystallisation unit 205. In an example, separator 202 is gravity sedimentation, settling, or an enhanced gravity separation e.g. hydrocyclones. Solid's slurry 221 is produced from the separator 202 which forms the first product and is suitable for disposal by a suitable waste route (e.g. encapsulation). In an example, separator 201 is configured to separate water from the radioactive particles based on the density of the solids in fluid 201. In an embodiment, separator 202 is a settling tank or a gravity assisted separation unit, e.g. a hydrocyclone.

Clarified fluid 203 may be passed to a first stage crystalliser 205 to form ice crystals which float to a surface of the fluid within the first stage crystalliser 205, and form crystals comprising the neutron absorber which sink within the first stage crystalliser 205. Optionally, before entering the first stage crystalliser 205, clarified fluid 206 may be pre-cooled by at least one heat exchanger(s) 204, which may be arranged in series. Heat exchanger(s) 204 may be commercial metallic shell and tube construction and may be configured specially to prevent accumulation of radioactive particulates and avoid potential criticality. Heat exchanger(s) 204 may be cooled by media selected for optimisation of the cooling/melting cycle energy with the intermediate of a commercial refrigeration plant. In an example, heat exchangers 204 may comprise two heat exchanges, i.e. a first stage and a second stage heat exchanger connected in series. In the example, the first stage heat exchanger may be cooled with chilled water and the second stage by water/glycol mixture or by direct evaporation of refrigerant. The liquor may be brought close to its freezing point. Continuing the example, the first stage heat exchanger may cool the clarified fluid 203 to about -2°C to -5°C, and the second stage heat exchanger may cool the clarified fluid 203 to about -12 °C to -20°C. Shielding may be provided around heat exchangers 204, and other component of system 200, to protect operators from radiation and the liquid velocity is maintained to prevent deposition of solids.

Clarified fluid 203, i.e. liquor, is introduced to the first stage crystalliser unit 205 wherein the liquor is cooled below its freezing point. The process of nucleate freezing and crystal formation may occur on internal cooled metallic surfaces of the crystalliser which are mechanically scraped by electrically driven mechanical scrapers to prevent build-up of crystals (e.g. boric acid crystal and/or ice crystals). The metal cooling surfaces of crystalliser unit 205 may be electropolished stainless steel. Crystalliser unit 205 may have a cooling jacket cooled by the same fluids as defined for the second stage heat exchanger 204 noted in the example above. Crystallisation may also occur in the bulk liquid within crystalliser unit 205. During the crystal growth process, due to the characteristics of the physical chemistry the crystals grown may be pure, impurities such as ionic species (e.g. strontium) and particulates (e.g. metal dust <10 µm) are not incorporated into the crystal lattice. A density difference between (H₂O) ice crystals and other crystal formed (such as neutron absorber crystals, e.g. boric acid) exists within crystalliser unit 205. Less dense ice crystals rise to the top of crystalliser unit 205, whilst the higher density crystals (e.g. neutron absorber crystals) sink to the bottom of the crystalliser, along with free particulate, and pass to the next stage. As such, a neutron absorber according to this disclosure may have a greater crystal density than an ice crystal. Solid particles (concrete, steel, uranium) with crystalliser unit 205 will settle as a function of their density, shape, size and the viscosity of the liquor. In an example, a settling rate of solid particles may be 0.5 to 2 m.hr-1. Ice crystals rise to the top of the crystalliser unit 205 by buoyancy and may be continuously removed by mechanical means, e.g. mechanical members configured to remove crystals from a liquid surface, to a first wash system 208 via a first ice crystal steam 207. First wash system 208 is configured to cleanse a surface of the ice crystals to reduce entrainment of liquor and small particles on the surface of the crystal. First wash system 208 may use water, e.g. water sprayed onto the surface of the ice crystals, to cleanse the ice crystals. The wash water 210 is returned to first stage crystalliser 205 as a recycle stream. Washed ice crystals from first wash system 208 are transferred to a melter 213 where they are melted. In an example melter 213 is a melter having electrical heating elements. In another example, washed ice crystals are melted using heat rejected from the initial cooling stages, i.e. a heated vessel, to save electrical energy. Melted purified water 240 from melter 213 may be re-circulated as wash fluid 209, 229 to first wash system 208, second wash system 228, or pumped to cutting zone 241.

Bottom product 217 from crystallisation unit 205 is a mixture of neutron absorber crystals (e.g. boric acid), fine suspended solids, dissolved salts, and cold liquor. Bottom product 217 is separated in separator 218 to produce a first crystal rich slurry 219 and liquor 220 which also contains fine suspended solids, and dissolved salts. Separator 218 is configured to separate the first crystal rich slurry 219 by a method dependant on the concentration and density of the components which, in an example, may be gravity sedimentation, settling, or an enhanced gravity separation (e.g. hydrocyclones or centrifuge). First crystal rich slurry 219, comprising the neutron absorber, is a product suitable for re-use in the process such that the neutron absorber can be stored and/or re-used to mitigate against criticality in the cutting zone. Liquor stream 220 containing all dissolved materials and remaining particulates is fed to a second crystalliser unit 225 which utilizes a similar method of operation as the first stage crystalliser unit 205. Crystalliser unit 225 further reduces the temperature of liquor stream 220 below a saturation point for the neutron absorber (e.g. boric acid) leading to more precipitation of neutron absorber crystal. Further, In crystalliser unit 225, crystallisation of water in liquor stream 220 also occurs and resulting ice crystals are removed in second ice crystal stream 227 causes further concentration of the liquor and particulates. Ice crystals rise to the top of the crystallisation unit 225 by buoyancy and may be continuously removed by mechanical means to a second wash system 228. The bottom product 237 of second crystallisation unit 225 may be a mixture of fine suspended solids, cold liquor, and dense crystals comprising the neutron absorber (e.g. boric acid). Bottom product 237 may be sent to separator 238 for separation into a second crystal rich slurry 239 and a liquor concentrate 240 containing remaining particulates and dissolved salts. Liquor concentrate 240 may be the final waste stream and contain remaining suspended particulates and dissolved salts. Similar to first crystal rich slurry 219, second crystal rich slurry 239 comprises the neutron absorber (e.g. boric acid) which may be re-used in the cutting zone to mitigate against criticality. Additives, such as pH modifiers, are not required to remove the neutron absorber out of solution in the liquor for separation according to the systems and methods described herein.

Second ice crystal stream 227 may be sent to second wash system 228. Second wash system 227 may cleanse a surface of ice crystals with wash fluid 229 to reduce the entrainment of liquor and small particles on the wet surface of the ice crystals. Wash water 230 is returned to the second stage crystalliser unit 225 as a recycle.

Example systems 100, 200 described herein may be free of polymeric materials. Polymeric materials are employed in reverse osmosis, ultrafiltration, or ion exchange stages of conventional treatment system which may be limited to a radiation dose of less than 10⁵ Gy ("Application of Membrane Technologies for Liquid Radioactive Waste Procession", Technical Reports Series No. 431, IAEA, page 23, section 4.1.5). A system according to this disclosure may be resistant to high levels of radiation due to the elimination of polymeric materials.

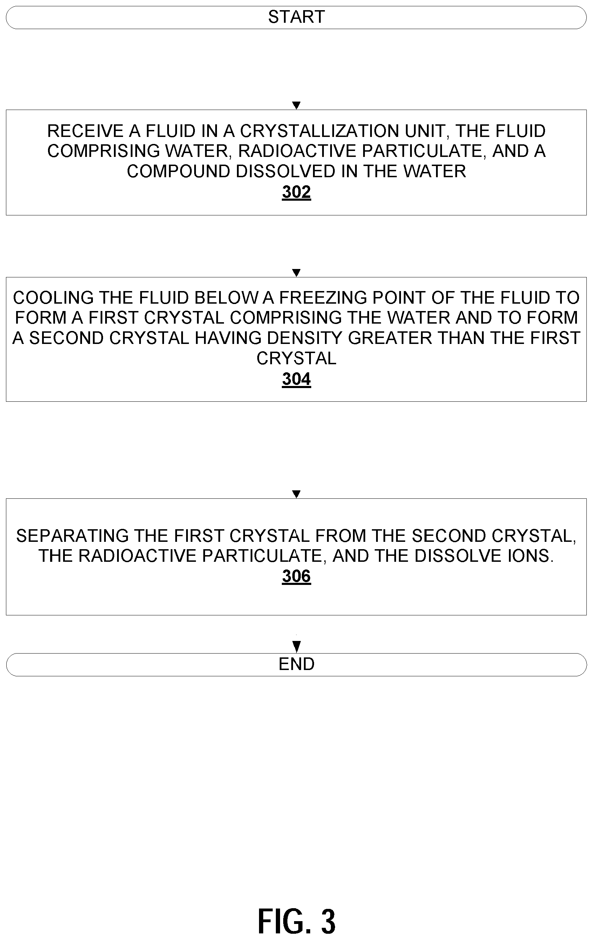

Referring to FIG. 3, a schematic diagram illustrating a process of for treating fluid comprising water, radioactive particulate, dissolved ions, and a neutron absorber is illustrated. Recovered water and neutron absorber from the process may be re-used which minimizes the amounts of new materials, i.e. water and neutron absorbers, that are used in a cutting zone. In an example, the cutting zone may be a nuclear reactor that is damaged, decommissioned, or contains equipment desired to be disassembled. The process comprises, at 302, receiving the fluid from a cutting zone. The fluid may be received in a crystalliser unit having cooling surface(s) configured to withdraw heat from the fluid. The cooling surface(s) may be scrapped by mechanical means, e.g. scrapping members, to dislodge crystals on the cooling surfaces. In an embodiment, the fluid is pre-cooled before it is received in the crystallisation unit to a temperature above the freezing point of the fluid, e.g. about -2°C. In an embodiment, solid suspended particles are removed from the fluid before the fluid is received in the crystallization unit.

At 304, the fluid is cooled below a freezing point of the fluid. As the fluid is cooled below its freezing point, water and neutron absorber in the fluid will crystalize. In an embodiment, the fluid is cooled to about 2°C to -6°C. In another embodiment, the fluid is cooled to about -12°C to -20°C. The first crystal comprising the water is formed; and a second crystal comprising the neutron absorber is formed. In an embodiment, the neutron absorber is boric acid. Crystallisation may occur in the bulk liquid of the fluid or on cooling surface(s) of the crystalliser unit. During the crystal growth process, due to the characteristics of the physical chemistry the crystals grown may be pure, impurities such as ionic species (e.g. strontium) and particulates (e.g. metal dust <10 µm) are not incorporated into the crystal lattice. A density difference between the first crystal and the second crystal, i.e. ice crystals and neutron absorber crystals (e.g. boric acid) respectively, may cause less dense ice crystals to rise to the top of the fluid, whilst the higher density second crystal (i.e. the neutron absorber crystal) sinks to the bottom of the fluid, along with free particulate, and pass to the next stage. Solid particles (e.g. concrete, steel, uranium) within the fluid will settle as a function of their density, shape, size, and the viscosity of the liquor. Dissolved ions will also remain the fluid. In an embodiment, solid particulate in the fluid have a settling rate in a range of 0.5 to 2 m.hr⁻¹. Because the first and/or second crystal may be formed on cooling surfaces(s) of the crystalliser unit, in an embodiment, the first and/or second crystals may be mechanically scrapped from the cooling surface(s) of the crystallisation unit.

At 306, the first crystal is separated from the second crystal, the radioactive particulate, and the dissolved ions. In an example, the first crystal may be separated from the second crystal by mechanical means, such as mechanical member skimming crystals from a surface of the fluid, or a conveyor.

In an embodiment, after the first crystal is separated from the second crystal, the radioactive particulate, and the dissolved ions, the first crystal is washed to cleanse the surface of the first crystal to reduce an amount of the fluid and the radioactive particulate entrained on the surface of the first crystal. The first crystal may also be melted to form a cleansed water which may be re-circulating to the cutting zone.

In an embodiment, the second crystal, the radioactive particulate, and the dissolved ions from a bottom portion of the crystallization unit, and separating the second crystal from the radioactive particulate, and the dissolved ions in a separator using at least one of gravity sedimentation, settling, or enhanced gravity separation. In an example, enhanced gravity separation is hydrocycloning or centrifuging.

In the systems and processes described herein, deposition of solids, which may be radioactive, can be mitigated by maintaining fluid velocity above a deposition threshold of a portion of the system and/or process described herein. In an example, a process described herein may require, with at least one pump, maintaining the fluid at a velocity greater than a deposition threshold through the crystalliser unit.

In the systems and processes described herein, shielding may be positioned to provide protection against radioactive particulate for at least one aspect of the systems and processes described herein. Shielding may protect personal proximate to the systems and processes described herein from radiation.

Although the embodiments have been described in detail, it should be understood that various changes, substitutions and alterations can be made herein without departing from the scope. Moreover, the scope of the present application is not intended to be limited to the particular embodiments of the process, machine, manufacture, composition of matter, means, methods and steps described in the specification.

As one of ordinary skill in the art will readily appreciate from the disclosure, processes, machines, manufacture, compositions of matter, means, methods, or steps, presently existing or later to be developed, that perform substantially the same function or achieve substantially the same result as the corresponding embodiments described herein may be utilized.

As can be understood, the examples described above and illustrated are intended to be exemplary only.

## Claims

1. A process for treating fluid comprising water, radioactive particulate, dissolved ions, and a neutron absorber, the fluid received from a cutting zone for recovery of radioactive components, the process comprising:
- receiving a fluid in a crystallization unit (105, 205), the fluid comprising the water, the radioactive particulate, and the neutron absorber dissolved in the fluid;
- cooling the fluid below a freezing point of the fluid to form a first crystal comprising the water and to form a second crystal comprising the neutron absorber, the second crystal having a greater density than the first crystal;
- separating the first crystal from the second crystal, the radioactive particulate, and the dissolved ions.

2. The process of claim 1,
wherein the neutron absorber is boric acid.

3. The process of any one of claims 1-2,
wherein the radioactive particulate have a settling rate in a range of 0.5 to 2 m.hr⁻¹.

4. The process of any one of claims 1-3,
comprising removing solid suspended particles from the fluid before the fluid is received in the crystallization unit (105, 205).

5. The process of any one of claims 1-4,
comprising pre-cooling the fluid before it is received in the crystallisation unit (105, 205) to a temperature above the freezing point of the fluid.

6. The process of any one of claims 1-5,
comprising mechanically scrapping at least one of the first crystal and the second crystal from a cooled surface of the crystallisation unit (105, 205).

7. The process of any one of claims 1-6,
comprising mechanically removing the first crystal from the crystallisation unit (105, 205), preferably comprising washing the first crystal to cleanse the surface of the first crystal to reduce an amount of the fluid and the radioactive particulate entrained on the surface of the first crystal, more preferably melting the first crystal to form a cleansed water and re-circulating the cleansed water to the cutting zone.

8. The process of any one of claims 1-7,
comprising maintaining, with at least one pump, the fluid at a velocity greater than a deposition threshold through the crystallization unit.

9. The process of any one of claims 1-8,
comprising removing the second crystal, the radioactive particulate, and the dissolved ions from a bottom portion of the crystallization unit, and separating the second crystal from the radioactive particulate, and the dissolved ions in a separator using at least one of gravity sedimentation, settling, or enhanced gravity separation, preferably, the enhanced gravity separation is hydrocycloning or centrifuging.

10. The process of any one of claims 1-9,
comprising providing shielding from the radioactive particulate for at least one aspect of the process.

11. A system (100, 200) for treating fluid comprising water, radioactive particulate, dissolved ions, and a neutron absorber, the fluid received from a reactor cutting zone (103), the system comprising:
- at least one heat exchanger (104, 204) for cooling the fluid containing the radioactive particulate;
- at least one pump (102) configured to pump the fluid at a velocity greater than a deposition threshold through the at least one heat exchanger (104, 204);
- a crystallisation unit (105, 205) configured to cool the fluid initially cooled by the at least one heat exchanger to a temperature below a freezing point of the fluid to form a first crystal comprising the water and to form a second crystal comprising the neutron absorber, the crystallisation unit (105, 205) comprising a mechanical device for removing the first crystal from the crystallisation unit (105, 205) and an outlet for discharging cooled fluid, the second crystal, radioactive particulate, and the dissolved ions;
- at least one scraper for removing at least one of the first and second crystals formed from the fluid in the crystallization unit (105, 205);
- a wash system (108, 208) configured to reduce small particles entrained on the first crystal with surface water; and
- a melter (113, 213) configured to melt the washed crystals into a fluid to be returned to the reactor cutting zone.

12. The system of claim 11 comprising:
- a fluid treatment system (115) configured to treat the melted crystals before they are returned to the reactor cutting zone (103, 241).

13. The system of claim 11 comprising:
- a settling tank (118), for receiving bottom product from the crystallisation unit, and separating the bottom product; and
- a supernatant treatment system (121, 122) configured to treat supernatant from the settling tank (118).

14. The system of claim 11 comprising:
- one or more shielding elements configured to provide shielding for one or more aspects of the system.

15. The system of claim 11 comprising a second stage crystalliser unit (225) configured to receive the cooled fluid, the second crystal, radioactive particulate, and the dissolved ions from the crystalliser unit (205), the second stage crystalliser unit comprising a heat exchange for reducing a temperature of the cooled fluid, the second crystal, radioactive particulate, and the dissolved ions to below a saturation point of the neutron absorber to precipitate a third crystal comprising water and a fourth crystal comprising the neutron absorber, the second stage crystalliser unit comprising a second mechanical device for removing the third crystal and a second outlet for discharging cooled fluid, the second crystal, the fourth crystal, radioactive particulate, and the dissolved ions preferably comprising a separator (202) for separating the cooled fluid, the second crystal, the fourth crystal, radioactive particulate, and the dissolved ions discharged from the second outlet into a crystal rich slurry and a liquor concentrate, the crystal rich slurry including the second crystal and the fourth crystal, and the liquor concentrate including the cooled fluid, radioactive particulate, and the dissolved ions.

## Patentansprüche

1. Verfahren zur Behandlung einer Flüssigkeit, die Wasser, radioaktive Partikel, gelöste Ionen und einen Neutronenabsorber aufweist, wobei die Flüssigkeit aus einer Schneidzone zur Rückgewinnung radioaktiver Komponenten erhalten wird, wobei das Verfahren Folgendes aufweist:
- Aufnehmen einer Flüssigkeit in einer Kristallisationseinheit (105, 205), wobei die Flüssigkeit das Wasser, die radioaktiven Partikel und den in der Flüssigkeit gelösten Neutronenabsorber aufweist;
- Kühlen der Flüssigkeit unter einen Gefrierpunkt der Flüssigkeit, um einen ersten Kristall zu bilden, der das Wasser aufweist, und um einen zweiten Kristall zu bilden, der den Neutronenabsorber aufweist, wobei der zweite Kristall eine größere Dichte als der erste Kristall hat;
- Trennen des ersten Kristalls vom zweiten Kristall, den radioaktiven Partikeln und den gelösten Ionen.

2. Verfahren nach Anspruch 1,
wobei der Neutronenabsorber Borsäure ist.

3. Verfahren nach einem der Ansprüche 1 bis 2,
wobei die radioaktiven Partikel eine Absetzgeschwindigkeit im Bereich von 0,5 bis 2 m.h⁻¹ aufweisen.

4. Verfahren nach einem der Ansprüche 1 bis 3,
welches das Entfernen fester Schwebeteilchen aus der Flüssigkeit, bevor die Flüssigkeit in der Kristallisationseinheit (105, 205) aufgenommen wird, aufweist.

5. Verfahren nach einem der Ansprüche 1 bis 4,
welches das Vorkühlen der Flüssigkeit vor ihrer Aufnahme in die Kristallisationseinheit (105, 205) auf eine Temperatur oberhalb des Gefrierpunkts der Flüssigkeit aufweist.

6. Verfahren nach einem der Ansprüche 1 bis 5,
welches das mechanische Abkratzen mindestens eines des ersten Kristalls und des zweiten Kristalls von einer gekühlten Oberfläche der Kristallisationseinheit (105, 205) aufweist.

7. Verfahren nach einem der Ansprüche 1 bis 6,
welches das mechanische Entfernen des ersten Kristalls von der Kristallisationseinheit (105, 205) aufweist, vorzugsweise das Waschen des ersten Kristalls aufweist, um die Oberfläche des ersten Kristalls zu reinigen, um die Menge der Flüssigkeit und der radioaktiven Partikel, die auf der Oberfläche des ersten Kristalls mitgeführt werden, zu reduzieren, noch bevorzugter Schmelzen des ersten Kristalls, um gereinigtes Wasser zu bilden, und Zurückführen des gereinigten Wassers in die Schneidzone.

8. Verfahren nach einem der Ansprüche 1 bis 7,
welches das Halten der Flüssigkeit, mit mindestens einer Pumpe, auf einer Geschwindigkeit durch die Kristallisationseinheit, die größer als ein Abscheidungsschwellenwert ist, aufweist.

9. Verfahren nach einem der Ansprüche 1 bis 8,
welches das Entfernen des zweiten Kristalls, der radioaktiven Partikel und der gelösten Ionen aus einem unteren Bereich der Kristallisationseinheit aufweist, und Trennen des zweiten Kristalls von den radioaktiven Partikeln und den gelösten Ionen in einem Separator unter Verwendung mindestens eines von Schwerkraftsedimentation, Absetzen oder verstärkte Schwerkrafttrennung, wobei die verstärkte Schwerkrafttrennung vorzugsweise Hydrozyklonieren oder Zentrifugieren ist.

10. Verfahren nach einem der Ansprüche 1 bis 9,
welches eine Abschirmung gegen die radioaktiven Partikel aufweist für mindestens einen Aspekt des Verfahrens.

11. System (100, 200) zur Behandlung einer Flüssigkeit, die Wasser, radioaktive Partikel, gelöste Ionen und einen Neutronenabsorber aufweist, wobei die Flüssigkeit aus einer Reaktorschneidzone (103) erhalten wird, wobei das System Folgendes aufweist:
- mindestens einen Wärmetauscher (104, 204) zum Kühlen der Flüssigkeit, die die radioaktiven Partikel enthält;
- mindestens eine Pumpe (102), die so konfiguriert ist, dass sie die Flüssigkeit mit einer Geschwindigkeit, die größer als ein Abscheidungsschwellenwert ist, durch den mindestens einen Wärmetauscher (104, 204) pumpt;
- Kristallisationseinheit (105, 205), die so konfiguriert ist, dass sie die ursprünglich durch den mindestens einen Wärmetauscher gekühlte Flüssigkeit auf eine Temperatur unterhalb des Gefrierpunkts der Flüssigkeit kühlt, um einen ersten Kristall zu bilden, der das Wasser aufweist, und um einen zweiten Kristall zu bilden, der den Neutronenabsorber aufweist, wobei die Kristallisationseinheit (105, 205) eine mechanische Vorrichtung zum Entfernen des ersten Kristalls von der Kristallisationseinheit (105, 205) und einen Auslass zum Abgeben von gekühlter Flüssigkeit, dem zweiten Kristall, radioaktiven Partikeln und den gelösten Ionen aufweist;
- mindestens einen Schaber zum Entfernen mindestens eines des ersten und des zweiten Kristalls, die aus der Flüssigkeit in der Kristallisationseinheit (105, 205) gebildet wurden;
- ein Waschsystem (108, 208), das so konfiguriert ist, dass es kleine Partikel, die auf dem ersten Kristall mit Oberflächenwasser mitgeführt werden, reduziert; und
- eine Schmelzvorrichtung (113, 213), die so konfiguriert ist, dass sie die gewaschenen Kristalle zu einer Flüssigkeit schmilzt, die in die Schneidzone des Reaktors zurückgeführt wird.

12. System nach Anspruch 11, das Folgendes aufweist:
- ein Flüssigkeitsbehandlungssystem (115), das so konfiguriert ist, dass es die geschmolzenen Kristalle behandelt, bevor sie in die Schneidzone (103, 241) des Reaktors zurückgeführt werden.

13. System nach Anspruch 11, das Folgendes aufweist:
- einen Absetzbehälter (118) zum Aufnehmen des Bodenprodukts aus der Kristallisationseinheit und zum Abtrennen des Bodenprodukts; und
- ein Überstandsbehandlungssystem (121, 122), das so konfiguriert ist, dass es den Überstand aus dem Absetzbehälter (118) behandelt.

14. System nach Anspruch 11, das Folgendes aufweist:
- ein oder mehrere Abschirmelemente, die so konfiguriert sind, dass sie eine Abschirmung für einen oder mehrere Aspekte des Systems bereitstellen.

15. System nach Anspruch 11, das eine Kristallisationseinheit der zweiten Stufe (225) aufweist, die so konfiguriert ist, dass sie die gekühlte Flüssigkeit, den zweiten Kristall, radioaktive Partikel und die gelösten Ionen aus der Kristallisationseinheit (205) aufnimmt, wobei die Kristallisationseinheit der zweiten Stufe einen Wärmetauscher aufweist, um die Temperatur der gekühlten Flüssigkeit, des zweiten Kristalls, der radioaktiven Partikel und der gelösten Ionen unter einen Sättigungspunkt des Neutronenabsorbers zu senken, um einen dritten Kristall, der Wasser aufweist, und einen vierten Kristall, der den Neutronenabsorber aufweist, auszufällen, wobei die Kristallisationseinheit der zweiten Stufe eine zweite mechanische Vorrichtung zum Entfernen des dritten Kristalls und einen zweiten Auslass zum Abgeben gekühlter Flüssigkeit, des zweiten Kristalls, des vierten Kristalls, radioaktiver Partikel und der gelösten Ionen aufweist, die vorzugsweise einen Separator (202) zum Trennen der gekühlten Flüssigkeit, des zweiten Kristalls, des vierten Kristalls, der radioaktiven Partikel und der gelösten Ionen aufweist, die aus dem zweiten Auslass in eine kristallreiche Aufschlämmung und ein Flüssigkeitskonzentrat abgegeben werden, wobei die kristallreiche Aufschlämmung den zweiten Kristall und den vierten Kristall aufweist und das Flüssigkeitskonzentrat die gekühlte Flüssigkeit, die radioaktiven Partikel und die gelösten Ionen aufweist.

## Revendications

1. Procédé pour traiter un fluide comprenant de l'eau, des particules radioactives, des ions dissous, et un absorbeur de neutrons, le fluide étant reçu depuis une zone de découpe destinée à récupérer des composants radioactifs, le procédé comprenant les étapes consistant à :
- recevoir un fluide dans une unité de cristallisation (105, 205), le fluide comprenant l'eau, les particules radioactives, et l'absorbeur de neutrons dissous dans le fluide ;
- refroidir le fluide en dessous d'un point de congélation du fluide pour former un premier cristal comprenant l'eau et pour former un deuxième cristal comprenant l'absorbeur de neutrons, le deuxième cristal ayant une densité supérieure à celle du premier cristal ;
- séparer le premier cristal du deuxième cristal, des particules radioactives, et des ions dissous.

2. Procédé selon la revendication 1,
dans lequel l'absorbeur de neutrons est un acide borique.

3. Procédé selon l'une quelconque des revendications 1 à 2,
dans lequel les particules radioactives ont une vitesse de décantation dans une plage de 0,5 à 2 m·hr-1.

4. Procédé selon l'une quelconque des revendications 1 à 3,
comprenant l'étape consistant à éliminer des particules suspendues solides du fluide avant que le fluide soit reçu dans l'unité de cristallisation (105, 205).

5. Procédé selon l'une quelconque des revendications 1 à 4, comprenant l'étape consistant à pré-refroidir le fluide avant qu'il soit reçu dans l'unité de cristallisation (105, 205) à une température au-dessus du point de congélation du fluide.

6. Procédé selon l'une quelconque des revendications 1 à 5, comprenant l'étape consistant à racler mécaniquement l'un au moins du premier cristal et du deuxième cristal à partir d'une surface refroidie de l'unité de cristallisation (105, 205).

7. Procédé selon l'une quelconque des revendications 1 à 6, comprenant l'étape consistant à éliminer mécaniquement le premier cristal de l'unité de cristallisation (105, 205), de préférence comprenant l'étape consistant à laver le premier cristal pour nettoyer la surface du premier cristal afin de réduire une quantité du fluide et des particules radioactives entraînés sur la surface du premier cristal, de toute préférence l'étape consistant à faire fondre le premier cristal pour former une eau nettoyée et faire re-circuler l'eau nettoyée jusqu'à la zone de découpe.

8. Procédé selon l'une quelconque des revendications 1 à 7, comprenant l'étape consistant à maintenir, avec au moins une pompe, le fluide à une vitesse supérieure à un seuil de dépôt à travers l'unité de cristallisation.

9. Procédé selon l'une quelconque des revendications 1 à 8, comprenant l'étape consistant à éliminer le deuxième cristal, les particules radioactives, et les ions dissous, d'une portion de fond de l'unité de cristallisation, et séparer le deuxième cristal des particules radioactives et des ions dissous dans un séparateur en utilisant l'une au moins des méthodes suivantes : sédimentation par gravité, décantation, ou séparation par gravité améliorée, de préférence, la séparation par gravité améliorée étant l'hydrocyclonage ou la centrifugation.

10. Procédé selon l'une quelconque des revendications 1 à 9, comprenant l'étape consistant à fournir une protection contre les particules radioactives pour au moins un aspect du procédé.

11. Système (100, 200) destiné à traiter un fluide comprenant de l'eau, des particules radioactives, des ions dissous, et un absorbeur de neutrons, le fluide étant reçu depuis une zone de découpe de réacteur (103), le système comprenant :
- au moins un échangeur de chaleur (104, 204) destiné à refroidir le fluide contenant les particules radioactives ;
- au moins une pompe (102) configurée pour pomper le fluide à une vitesse supérieure à un seuil de dépôt à travers ledit au moins un échangeur de chaleur (104, 204) ;
- une unité de cristallisation (105, 205) configurée pour refroidir le fluide initialement refroidi par ledit au moins un échangeur de chaleur à une température en dessous d'un point de congélation du fluide pour former un premier cristal comprenant l'eau et pour former un deuxième cristal comprenant l'absorbeur de neutrons, l'unité de cristallisation (105, 205) comprenant un dispositif mécanique destiné à éliminer le premier cristal de l'unité de cristallisation (105, 205) et une sortie destinée à décharger un fluide refroidi, le deuxième cristal, des particules radioactives, et les ions dissous ;
- au moins un racleur destiné à éliminer l'un au moins du premier et du deuxième cristal formés à partir du fluide dans l'unité de cristallisation (105, 205) ;
- un système de lavage (108, 208) configuré pour réduire des petites particules entraînées sur le premier cristal avec de l'eau de surface ; et
- un moyen de fusion (113, 213) configuré pour faire fondre les cristaux lavés en un fluide devant être renvoyé à la zone de découpe de réacteur.

12. Système selon la revendication 11, comprenant :
- un système de traitement de fluide (115) configuré pour traiter les cristaux fondus avant qu'ils soient renvoyés à la zone de découpe de réacteur (103, 241).

13. Système selon la revendication 11, comprenant :
- un réservoir de décantation (118), destiné à recevoir un produit de fond depuis l'unité de cristallisation, et à séparer le produit de fond ; et
- un système de traitement de surnageant (121, 122) configuré pour traiter un surnageant provenant du réservoir de décantation (118).

14. Système selon la revendication 11, comprenant :
- un ou plusieurs éléments de protection configurés pour fournir une protection pour un ou plusieurs aspects du système.

15. Système selon la revendication 11, comprenant une unité de cristallisation de second niveau (225) configurée pour recevoir le fluide refroidi, le deuxième cristal, des particules radioactives, et les ions dissous, depuis l'unité de cristallisation (205), l'unité de cristallisation de second niveau comprenant un échangeur de chaleur destiné à réduire une température du fluide refroidi, du deuxième cristal, de particules radioactives, et des ions dissous, jusqu'à en dessous d'un point de saturation de l'absorbeur de neutrons pour précipiter un troisième cristal comprenant de l'eau et un quatrième cristal comprenant l'absorbeur de neutrons, l'unité de cristallisation de second niveau comprenant un second dispositif mécanique destiné à éliminer le troisième cristal et une seconde sortie destinée à décharger un fluide refroidi, le deuxième cristal, le quatrième cristal, des particules radioactives, et les ions dissous, de préférence comprenant un séparateur (202) destiné à séparer le fluide refroidi, le deuxième cristal, le quatrième cristal, des particules radioactives, et les ions dissous déchargés depuis la seconde sortie en une boue riche en cristal et un concentré de liqueur, la boue riche en cristal incluant le deuxième cristal et le quatrième cristal, et le concentré de liqueur incluant le liquide refroidi, des particules radioactives, et les ions dissous.
